(19) **Europäisches Patentamt / European Patent Office / Office européen des brevets**

(11) **EP 4 629 691 A1**

(12) **EUROPEAN PATENT APPLICATION**
published in accordance with Art. 153(4) EPC

(43) Date of publication:
08.10.2025 Bulletin 2025/41

(21) Application number: 24853318.4

(22) Date of filing: 03.06.2024

(51) International Patent Classification (IPC):
*H04W 24/10* (2009.01)

(86) International application number:
PCT/CN2024/097054

(87) International publication number:
WO 2025/035903 (20.02.2025 Gazette 2025/08)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 11.08.2023 CN 202311020970

(71) Applicant: ZTE CORPORATION
Shenzhen, Guangdong 518057 (CN)

(72) Inventors:
• XING, Weimin
  Shenzhen, Guangdong 518057 (CN)
• MIAO, Ting
  Shenzhen, Guangdong 518057 (CN)
• LU, Youxiong
  Shenzhen, Guangdong 518057 (CN)
• HU, Yuzhou
  Shenzhen, Guangdong 518057 (CN)
• CHEN, Jie
  Shenzhen, Guangdong 518057 (CN)

(74) Representative: Aipex B.V.
Vestdijk 51
5611 CA Eindhoven (NL)

(54) **REFERENCE SIGNAL MEASUREMENT REPORTING METHOD, DEVICE AND STORAGE MEDIUM**

(57) Provided are a reference signal measurement reporting method, a device, and a storage medium. The method is applied to a transmitting end and includes the following: A first reference signal group is configured. The first reference signal group includes at least one first reference signal. The first reference signal group has a corresponding measurement purpose. A first parameter corresponding to each first reference signal is configured. The first parameter is used to determine a feedback channel resource corresponding to the each first reference signal. The at least one first reference signal in the first reference signal group is sent, and a first feedback channel is received on a feedback channel resource corresponding to the at least one first reference signal.

Configure a first reference signal group, where the first reference signal group includes at least one first reference signal, the first reference signal group has a corresponding measurement purpose, and configure a first parameter corresponding to each first reference signal, where the first parameter is used to determine a feedback channel resource corresponding to the each first reference signal — S110

Send at least one first reference signal in the first reference signal group and receive a first feedback channel on a feedback channel resource corresponding to the at least one first reference signal — S120

**FIG. 1**

EP 4 629 691 A1

**Description**

CROSS-REFERENCE TO RELATED APPLICATION(S)

The present application claims priority to Chinese Patent Application No. 202311020970.3 filed with the China National Intellectual Property Administration (CNIPA) on Aug. 11, 2023, entitled Reference Signal Measurement Reporting Method, Device and Storage Medium, the disclosure of which is incorporated herein by reference in its entirety.

TECHNICAL FIELD

The present application relates to the field of communication technology, in particular, to a reference signal measurement reporting method, a device, and a storage medium.

BACKGROUND

Direct communication may also be referred to as sidelink (SL) communication or short-range communication. In the present application, SL communication refers to various forms of direct communication. Due to spectrum resource constraints, current SL communication needs to consider operating at higher frequencies, such as above 24 GHz. However, high-frequency operation introduces additional challenges, such as greater transmission loss, necessitating the use of directional beams to extend coverage.

In traditional cellular communication networks, a user equipment (UE) typically only needs to communicate with its connected base station (BS), so the UE only performs beam training with the connected base station. In contrast, for SL communication, a UE needs to communicate with many surrounding UEs. If the UE works at high frequencies, beam measurement reporting and other beam training mechanisms between UEs need to be considered. Unlike cellular networks where a UE only performs beam training with a base station, SL communication requires beam training between UEs, significantly increasing the number of training instances and overhead from the perspective of a single UE.

Typically, the beam training process involves the transmitting end sending one or more reference signals (RSs), each RS corresponding to a beam, and the receiving end measuring these RSs and reporting some RS measurement results back to the transmitting end. In this manner, the transmitting end can acquire the reception status of its transmitted beams at the receiving end. An SL UE may send different RSs for different purposes or uses. However, if an SL UE sends different RSs for each other UE and sends different RSs for different purposes or uses for the same UE, the number of RSs to be sent would be substantial, leading to a high number of beam training instances and significant overhead, which impacts SL communication efficiency.

SUMMARY

In a first aspect, embodiments of the present application provide a reference signal measurement reporting method. The method is applied to a transmitting end and includes the following: A first reference signal group is configured. The first reference signal group includes at least one first reference signal. The first reference signal group has a corresponding measurement purpose. A first parameter corresponding to each first reference signal is configured. The first parameter is used to determine a feedback channel resource corresponding to the each first reference signal. The at least one first reference signal in the first reference signal group is sent, and a first feedback channel is received on a feedback channel resource corresponding to the at least one first reference signal.

In a second aspect, embodiments of the present application provide a reference signal measurement reporting method. The method is applied to a receiving end and includes the following: A first reference signal sent by a transmitting end is detected, a first parameter corresponding to the first reference signal is determined, and a measurement purpose of the first reference signal is determined. Based on the first parameter, a feedback channel resource corresponding to the first reference signal is determined from a feedback channel resource set corresponding to the first reference signal, and a first feedback channel for the first reference signal is sent to the transmitting end on the feedback channel resource.

In a third aspect, embodiments of the present application provide a reference signal measurement reporting apparatus. The apparatus includes a configuration module and a transmission module. The configuration module is configured to configure a first reference signal group. The first reference signal group includes at least one first reference signal. The first reference signal group has a corresponding measurement purpose. A first parameter corresponding to each first reference signal is configured. The first parameter is used to determine a feedback channel resource corresponding to the each first reference signal. The transmission module is configured to send the at least one first reference signal in the first reference signal group and receive a first feedback channel on a feedback channel resource corresponding to the at least one first reference signal.

In a fourth aspect, embodiments of the present application provide a reference signal measurement reporting apparatus. The apparatus includes a detection module and a transmission module. The detection module is configured to detect a first reference signal sent by a transmitting end, determine a first parameter corresponding to the first reference signal, and determine a measurement purpose of the first reference signal. The transmission module is configured to determine, based on the first parameter, a feedback channel resource corresponding to the first reference signal from a feedback channel resource set corresponding to the first reference signal, and send a first feedback channel for the first reference signal to the transmitting end on the feedback channel resource.

In a fifth aspect, embodiments of the present application provide a terminal device. The device includes a memory configured to store a program and a processor configured to execute the program. When the program is executed, the reference signal measurement reporting method according to any implementation of the first aspect or any implementation of the second aspect is performed.

In a sixth aspect, embodiments of the present application provide a non-transitory storage medium. The storage medium includes a stored program. When the program is executed, the reference signal measurement reporting method according to any implementation of the first aspect or any implementation of the second aspect is performed.

BRIEF DESCRIPTION OF DRAWINGS

FIG. 1 is a flowchart of a reference signal measurement reporting method according to an embodiment of the present application.

FIG. 2 is a flowchart of another reference signal measurement reporting method according to an embodiment of the present application.

FIG. 3 is a diagram illustrating the structure of a reference signal measurement reporting apparatus according to an embodiment of the present application.

FIG. 4 is a diagram illustrating the structure of another reference signal measurement reporting apparatus according to an embodiment of the present application.

FIG. 5 is a diagram illustrating the structure of a terminal device according to an embodiment of the present application.

FIG. 6 is a diagram illustrating the structure of another terminal device according to an embodiment of the present application.

DETAILED DESCRIPTION

Objects, solutions, and beneficial effects of the present application will be more apparent from a description of embodiments of the present application in conjunction with the drawings. It is to be noted that if not in collision, the embodiments described herein and the features thereof may be combined with each other.

An SL UE may send RSs for different purposes or uses. Examples are given below.

Typically, unicast communication between UEs requires establishing a unicast connection. At high frequencies, due to narrow beam widths, UEs need to first perform initial beam pairing (IBP) to achieve ideal communication effects. Initial beam pairing may occur before, during, or after the establishment of a unicast connection. For example, before establishing a unicast connection, a transmitting UE may send RSs to allow surrounding UEs to discover it and measure the transmitted beams. If surrounding UEs want to communicate with the transmitting UE, they can use these RSs to complete beam training before connection establishment.

After a unicast connection is established, a UE may send RSs to enable the corresponding receiving end to measure and provide feedback, which is used for beam maintenance (BM) between the two devices.

After a unicast connection is established, to promptly determine whether the current working beam is valid, the transmitting UE may send specific RSs to enable the receiving UE to perform beam failure detection (BFD).

After a unicast connection is established, to facilitate rapid beam recovery after a beam failure, the transmitting UE may send RSs corresponding to candidate beams so that the receiving UE can evaluate these candidate beams and select a new working beam for beam recovery (candidate beam determination, CBD).

Generally, SL communication may be divided into two main communication modes. In the first mode (referred to as mode 1), the resources for a UE to send SL signals are scheduled by a base station. In the second mode (referred to as mode 2), a UE autonomously selects resources from a network-configured or pre-configured resource pool based on a resource selection strategy. The resource selection strategy mainly includes a sensing mechanism, a partial sensing mechanism, and a random selection mechanism. The preceding two modes are determined based on the resource allocation strategy for data transmission at the transmitting end, but the feedback channel for RSs at the receiving end does not use the preceding resource allocation strategy. For example, after receiving data, the receiving end may implicitly calculate the resource position of the feedback channel based on the position information of the data resource.

Regardless of the mode, for RSs sent by the transmitting end, the receiving UE needs to provide feedback on the corresponding beam measurement results, which requires more beam training instances and occupies corresponding feedback channel resources.

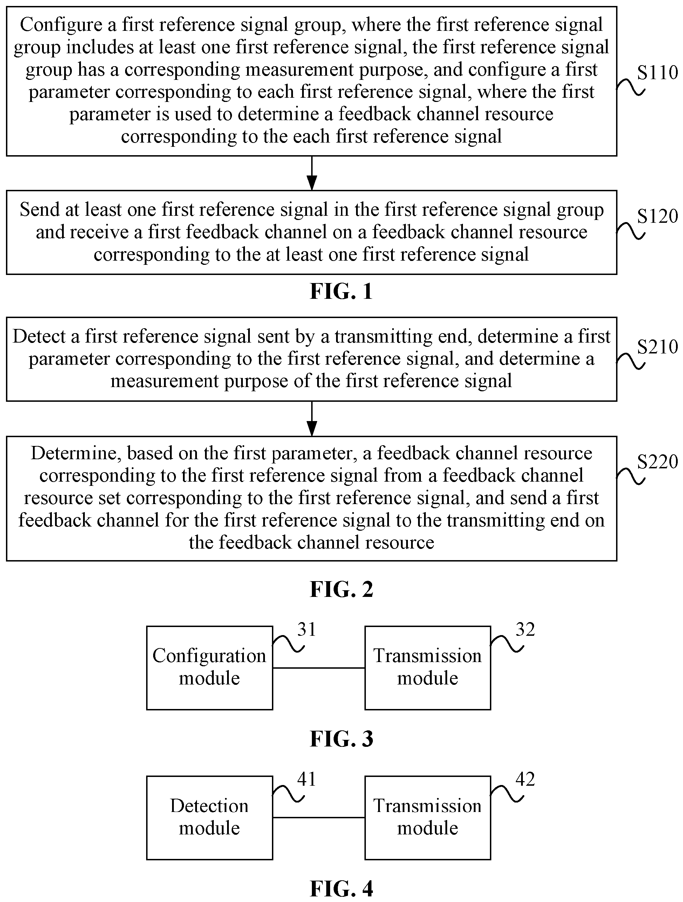

FIG. 1 is a flowchart of a reference signal measurement reporting method according to an embodiment of the present application. As shown in FIG. 1, the reference signal measurement reporting method provided by this embodiment includes S110 and S120.

In S110, a first reference signal group is configured, where the first reference signal group includes at least one first reference signal, the first reference signal group has a corresponding measurement purpose, and a first parameter corresponding to each first reference signal is configured, where the first parameter is used to determine a feedback channel resource corresponding to the each first reference signal.

The reference signal measurement reporting method provided by this embodiment is used for sending, measuring, and reporting feedback on reference signals in SL communication. This method provided by this embodiment is applied to a transmitting end, that is, an end sending the reference signals in SL communication.

To address the issues of feedback overhead and resource consumption for RS measurements in SL communication, the reference signal measurement reporting method provided by embodiments of the present application allows the same RS sent by a transmitting UE to be used for multiple purposes or by different receiving UEs simultaneously, thereby reducing the number of beam training instances and the resources occupied by feedback channels. Examples are given below.

For UEs that have not established a unicast connection, multiple receiving UEs may perform beam training on the same group of RSs sent by the transmitting UE.

For multiple receiving UEs that have established unicast connections, the same RS may be used for measurement. For example, a transmitting UE sends an RS, and multiple receiving UEs that have established unicast connections with the transmitting UE may be configured to measure this RS simultaneously (that is, each receiving UE is notified that the RS to be measured is the same RS). This arrangement avoids the resource overhead caused by the transmitting UE sending different RSs for different receiving UEs.

For the same receiving UE, RSs configured for different purposes or uses may also be the same RS. For example, a transmitting UE configures one group of RSs for determining candidate beams after a beam failure and another group of RSs for beam maintenance, but in practice, some or all of the RSs in these two groups are identical.

In the case where a single RS can be used for different purposes or uses or by multiple UEs, the issue of beam measurement feedback needs to be addressed. The receiving UE sends beam measurement information using a feedback channel, and the feedback channel is implicitly determined by the resources used by the RS. If an RS is used by multiple UEs for multiple purposes, the feedback channels corresponding to different UEs and purposes may conflict, making it impossible for the transmitting UE to receive these conflicting feedback channels. Even if the transmitting UE successfully receives these conflicting feedback channels, the transmitting UE cannot distinguish which receiving UE or purpose the feedback channel corresponds to.

Therefore, in embodiments of the present application, for an RS, the feedback channels for different purposes or uses and different UEs can correspond to different feedback channel resources based on the control of the transmitting UE, so as to avoid conflicts in feedback channel resources and enable a single RS to be detected by multiple UEs and used for different purposes.

First, the transmitting UE configures a first reference signal group. The first reference signal group includes at least one first reference signal, and each first reference signal corresponds to a beam. The first reference signal group has a corresponding measurement purpose. At least one first reference signal in the first reference signal group is treated as a whole, and the measurement purpose corresponding to the first reference signal group may be one or more. The transmitting end also configures a first parameter corresponding to each first reference signal in the first reference signal group. The first parameter is used to determine a feedback channel resource corresponding to the each first reference signal. The position of the feedback channel resource corresponding to a first reference signal corresponds to the measurement purpose corresponding to the first reference signal. In other words, the first parameter is used to indicate the measurement purpose corresponding to the first reference signal. In this manner, the transmitting UE can use one or a group of first reference signals to achieve different measurement purposes. By using the first parameter to indicate the feedback channel resources of the feedback channels corresponding to different measurement purposes, the transmitting UE can acquire the required measurement results based on the feedback channel resource of the feedback channel after receiving the feedback channel of the first reference signal.

In an embodiment, a reference signal group may correspond to one or more feedback channel resource sets, or each first reference signal in the first reference signal group corresponds to one or more feedback channel resource sets. Based on the first parameter corresponding to the first reference signal group or the first reference signal, the feedback channel resource is determined from the feedback channel resource set or feedback channel resources corresponding to the first reference signal group or the first reference signal.

In embodiments of the present application, an example where the RS is a synchronization signal is used for illustration. The synchronization signal, in SL communication, is also referred to as a sidelink synchronization signal and PSBCH block (S-SSB). An S-SSB includes not only the reference signal for measurement but also indication information, such as a physical sidelink broadcast channel (PSBCH). The transmitting UE may send a group of S-SSBs in one period, with each S-SSB corresponding to a beam direction. An S-SSB corresponds to a feedback channel resource set. In embodiments of the present application, an example where the feedback channel is a physical sidelink feedback channel (PSFCH) is used for illustration. A feedback channel resource set corresponding to an S-SSB includes R1 PSFCH channel resources. The feedback channel resource set is determined by mapping the time-frequency position of its corresponding S-SSB.

In an example, the network side or base station side configures a candidate resource set for an S-SSB. The candidate resource set includes several basic time-domain units in the time domain, and the basic time-domain units are referred to hereinafter as slots. These basic time-domain units may repeat with a certain period. In the frequency domain, the candidate resource set includes M basic frequency-domain units, and the basic frequency-domain units are referred to hereinafter as resource blocks (RB) or resource elements (RE). An S-SSB is generally sent on an S-SSB resource. An S-SSB resource typically refers to N basic frequency-domain units on several symbols in a slot, where M is greater than or equal to N, or M is a multiple of N. Similarly, in an example, the network side or base station side configures a candidate resource set for a PSFCH. The candidate resource set generally includes several symbols in several slots in the time domain. These slots with the PSFCH may repeat with a certain period. Generally, in the time domain, the symbols used for the PSFCH in a slot may also be referred to as a PSFCH occasion. In the frequency domain, the candidate resource set includes X basic frequency-domain units. A PSFCH is generally sent on a PSFCH resource. A PSFCH resource typically refers to Y basic frequency-domain units on several symbols in a slot, where X is greater than or equal to Y, or X is a multiple of Y. In an example, the slots included in the S-SSB candidate resource set may have a correspondence with the slots included in the PSFCH candidate resource set. For example, every N1 S-SSB slots are followed by the N2-th slot containing PSFCH resources, that is, the N2-th slot after the 0-th S-SSB resource contains PSFCH resources, the N2-th slot after the N1-th S-SSB resource contains PSFCH resources, and so on. In an example, if the preceding N2 equals 0, the PSFCH slots are a subset of the S-SSB slots. For example, PSFCH resources appear every N1 S-SSB slots, that is, PSFCH resources appear in the 0-th, N1-th, and N1*2-th S-SSB slots.

In an example, in the time domain, if an S-SSB resource is located in slot n, the corresponding PSFCH resource is located in the first slot configured with PSFCH resources after slot n+K. In an example, slot n+K may also be included after slot n+K. In an example, if the slots included in the S-SSB candidate resource set have a correspondence with the slots included in the PSFCH candidate resource set, it can be seen that one PSFCH occasion corresponds to at most N1 S-SSB slots, and the N1 S-SSB slots include at most $N^{S-SSB} = N1 * (M/N)$ S-SSB resources, while one PSFCH occasion includes $N^{PSFCH} = X/Y$ PSFCHs in the frequency domain. Thus, one S-SSB resource may correspond to

$$N_{S-SSB}^{PSFCH} = N^{PSFCH}/N^{S-SSB}$$ PSFCH resources in the frequency domain. If one PSFCH resource in the frequency domain may be distinguished into Z resources through cyclic shifts or other means, one S-SSB resource corresponds to a PSFCH resource set containing R1 PSFCH resources, where R1 equals $N_{S-SSB}^{PSFCH} * Z$. In an example, if the transmission of a UE occupies n S-SSB resources, the corresponding PSFCH resource set may include only the PSFCH resource set corresponding to the starting S-SSB resource, that is, R1 is $N_{S-SSB}^{PSFCH} * Z$, or the corresponding PSFCH resource set may include the PSFCH resource sets corresponding to all S-SSB resources, that is, R1 is $n * N_{S-SSB}^{PSFCH} * Z$. The specific correspondence is determined by network-side or base station-side configuration. In an example, the R1 PSFCH resources may be sequentially numbered, for example, first numbered by frequency-domain position and then by code-domain. For example, the number of a PSFCH resource in R1 is $N_{S-SSB}^{PSFCH} * i + j$, where i is the code-domain number of the PSFCH, and j is the frequency-domain number; numbering may also be done first by code-domain and then by frequency-domain.

For the transmitting UE, an example is used where the transmitting UE is UE1. When UE1 sends an S-SSB, the S-SSB may be used for measurement by multiple UEs and for multiple purposes. As mentioned above, the S-SSB corresponds to a feedback channel resource set containing R1 PSFCH resources. Each receiving UE, based on its corresponding first parameter, determines the PSFCH resource to use from the feedback channel resource set corresponding to the S-SSB.

In this embodiment, the first parameter is configured by the transmitting end, and the first parameter may be carried in the first reference signal and sent to the receiving end, or the transmitting end may indicate the first parameter to the receiving end through other means. In an embodiment, the first parameter may also be configured by the network side and sent to the receiving end by the network side, where the network side may be a network element in the core network or a base station. Alternatively, the first parameter may be predefined, meaning that the transmitting end and the receiving end pre-agree on the feedback channel resources occupied by feedback channels for different measurement purposes.

When each first reference signal in the first reference signal group corresponds to one or more feedback channel resource sets, the first parameter is used to determine the resource position of the feedback channel resource corresponding to the first reference signal from the one or more feedback channel resource sets corresponding to the first reference signal. When the first reference signal group corresponds to one or more feedback channel resource sets, the first parameter is used to determine the resource position of the feedback channel resource corresponding to the first reference signal from the one or more feedback channel resource sets corresponding to the first reference signal group.

The first parameter may include one of the following: a feedback resource identifier, an index of a feedback resource in the feedback channel resource set, or a group member identifier. That is, the first parameter may use the preceding identifier or index as an indication of the feedback channel resource.

The measurement purpose corresponding to the first reference signal group includes at least one of the following: initial beam pairing, beam maintenance, beam failure detection, or candidate beam determination. Detailed descriptions of reference signal measurement reporting for different measurement purposes of the first reference signal group will be provided below with specific embodiments.

The first reference signal group may also include at least one of the following: a feedback channel resource set or feedback channel resource subset corresponding to the first reference signal group; a device identifier corresponding to at least one first reference signal in the first reference signal group; or a time-frequency position and a period of at least one first reference signal in the first reference signal group.

In S120, at least one first reference signal in the first reference signal group is sent, and a first feedback channel is received on a feedback channel resource corresponding to the at least one first reference signal.

After configuring the first reference signal group, the transmitting UE sends at least one first reference signal in the first reference signal group. The first reference signal may be used for beam measurements for different purposes. After detecting and measuring the first reference signal during beam detection, the receiving end determines the measurement purpose corresponding to the first reference signal and places the measurement result of the first reference signal on a feedback channel resource corresponding to the first reference signal indicated by the first parameter to obtain the first feedback channel. The transmitting end receives the first feedback channel on the feedback channel resource corresponding to the at least one transmitted first reference signal. The transmitting end also determines the measurement result of the receiving end for the first reference signal based on the feedback channel resource where the first feedback channel is received, thereby completing the reference signal measurement reporting. The transmitting end configures only one reference signal group and indicates the feedback channel resources corresponding to different measurement purposes of the first reference signal through the first parameter. Therefore, multiplexing of the reference signal is achieved, reference signal resources are saved, and resource conflicts of feedback channels for different purposes are avoided.

If the first parameter is configured by the transmitting end, the receiving end that acquires the first parameter configuration from the transmitting end sends a feedback channel on a feedback channel resource corresponding to a first reference signal determined by the first parameter configured by the transmitting end. If the first parameter is predefined or configured by a network side, the receiving end that does not acquire the first parameter configuration from the transmitting end sends a feedback channel on a feedback channel resource corresponding to a first reference signal determined by a predefined first parameter or a first parameter configured by a network side.

It can be seen that even if different receiving UEs measure the same reference signal for different purposes, the different receiving UEs can determine their respective corresponding feedback channel resources based on their respective configuration information, thereby avoiding feedback channel conflicts.

When configuration or pre-configuration is involved in the embodiments of the present application, configuration generally comes from the network side, base station side, or a receiving UE that establishes a connection with the transmitting UE and is sent to the UE via signaling; pre-configuration generally refers to configurations provided by other higher-layer entities, such as the higher layers of the UE or other network entities. Hereafter, configuration and pre-configuration are not strictly distinguished and are collectively referred to as configuration. When pre-definition is involved, pre-definition generally refers to rules or parameters predetermined by protocols or standards, which generally do not change.

In the reference signal measurement reporting method provided by the embodiments of the present application, the transmitting end configures a first reference signal group, the first reference signal group includes at least one first reference signal, the first reference signal group has a corresponding measurement purpose, and the transmitting end configures a first parameter corresponding to each first reference signal, where the first parameter is used to determine a feedback channel resource corresponding to the each first reference signal. Then, at least one first reference signal in the first reference signal group is sent, and a first feedback channel is received on a feedback channel resource corresponding to the at least one first reference signal. The measurement result corresponding to the measurement purpose is determined by receiving the feedback channel resource of the first feedback channel so that the same reference signal can be used to achieve different measurement purposes, thereby saving reference signal resources and avoiding resource conflicts for feedback channels of the reference signal.

FIG. 2 is a flowchart of another reference signal measurement reporting method according to an embodiment of the present application. As shown in FIG. 2, the reference signal measurement reporting method provided by this embodiment includes S210 and S220.

In S210, a first reference signal sent by a transmitting end is detected, a first parameter corresponding to the first reference signal is determined, and a measurement purpose of the first reference signal is determined.

The reference signal measurement reporting method provided by this embodiment is used for sending, measuring, and reporting feedback on reference signals in SL communication. This method provided by this embodiment is applied to a receiving end, that is, an end that receives reference signals and provides feedback on measurement results for the received reference signals in SL communication.

The receiving end detects the reference signal. When a first reference signal transmitted by the transmitting end is detected, the receiving end further determines the first parameter corresponding to the first reference signal and determines the measurement purpose of the first reference signal. The first reference signal is included in a first reference signal group configured by the transmitting end. The first reference signal group includes at least one first reference signal, and each first reference signal corresponds to a beam. The first reference signal group has a corresponding measurement purpose. At least one first reference signal in the first reference signal group is treated as a whole, and the measurement purpose corresponding to the first reference signal group may be one or more. The first parameter corresponding to the first reference signal may be configured by the transmitting end or the network side, or the first parameter may be a predefined value. The first parameter is used to determine a feedback channel resource corresponding to the first reference signal. The position of the feedback channel resource corresponding to the first reference signal corresponds to the measurement purpose of the first reference signal. In this manner, the transmitting UE can use one or a group of first reference signals to achieve different measurement purposes. By using the first parameter to indicate the feedback channel resources of the feedback channels corresponding to different measurement purposes, the receiving end can determine the measurement purpose and the feedback channel resource for feeding back measurement result based on the first reference signal and the first parameter.

In an embodiment, the first parameter is configured by the transmitting end, and the first parameter may be carried in the first reference signal and sent to the receiving end, or the transmitting end may indicate the first parameter to the receiving end through other means. Alternatively, the first parameter may also be configured by the network side and sent to the receiving end by the network side, where the network side may be a network element in the core network or a base station. Alternatively, the first parameter may be predefined, meaning that the transmitting end and the receiving end pre-agree on the feedback channel resources occupied by feedback channels for different measurement purposes.

The measurement purpose corresponding to the first reference signal includes at least one of the following: initial beam pairing, beam maintenance, beam failure detection, or candidate beam determination. Detailed descriptions of reference signal measurement reporting for different measurement purposes of the first reference signal will be provided below with specific embodiments.

In S220, based on the first parameter, a feedback channel resource corresponding to the first reference signal is determined from a feedback channel resource set corresponding to the first reference signal, and a first feedback channel for the first reference signal is sent to the transmitting end on the feedback channel resource.

After receiving the first reference signal and determining the first parameter corresponding to the first reference signal, the receiving end may determine the feedback channel resource corresponding to the first reference signal from the feedback channel resource set corresponding to the first reference signal based on the first parameter. The receiving end then sends a first feedback channel for the first reference signal to the transmitting end on the feedback channel resource. The transmitting end receives the first feedback channel on the feedback channel resource corresponding to the at least one transmitted first reference signal. The transmitting end also determines the measurement result of the receiving end for the first reference signal based on the feedback channel resource where the first feedback channel is received, thereby completing the reference signal measurement reporting. The transmitting end configures only one reference signal group and indicates the feedback channel resources corresponding to different measurement purposes of the first reference signal through the first parameter. Therefore, multiplexing of the reference signal is achieved, reference signal resources are saved, and resource conflicts of feedback channels for different purposes are avoided.

In an embodiment, the reference signal is included in a first reference signal group, and the first reference signal group includes at least one first reference signal; the first reference signal group corresponds to one or more feedback channel resource sets, or each first reference signal in the first reference signal group corresponds to one or more feedback channel resource sets. Based on the first parameter corresponding to the first reference signal group or the first reference signal, the feedback channel resource is determined from the feedback channel resource set or feedback channel resources corresponding to the first reference signal group or the first reference signal.

When each first reference signal in the first reference signal group corresponds to one or more feedback channel resource sets, the feedback channel resource position corresponding to the first reference signal is determined from the one or more feedback channel resource sets corresponding to the first reference signal based on the first parameter. When the first reference signal group corresponds to one or more feedback channel resource sets, the feedback channel resource position corresponding to the first reference signal is determined from the one or more feedback channel resource sets corresponding to the first reference signal group based on the first parameter.

The first parameter may include one of the following: a feedback resource identifier, an index of a feedback resource in the feedback channel resource set, or a group member identifier. That is, the first parameter may use the preceding identifier or index as an indication of the feedback channel resource.

If the first parameter is configured by the transmitting end, the receiving end that acquires the first parameter configuration from the transmitting end determines a feedback channel resource corresponding to the first reference signal from a feedback channel resource set corresponding to a first reference signal determined by a first parameter configured by the transmitting end. If the first parameter is predefined or configured by a network side, the receiving end that does not acquire the first parameter configuration from the transmitting end determines a feedback channel resource corresponding to the first reference signal from a feedback channel resource set corresponding to a first reference signal determined by a predefined first parameter or a first parameter configured by a network side.

In the reference signal measurement reporting method provided by the embodiments of the present application, the receiving end detects a first reference signal sent by a transmitting end, determines a first parameter corresponding to the first reference signal, and determines a measurement purpose of the first reference signal. Based on the first parameter, a feedback channel resource corresponding to the first reference signal is determined from a feedback channel resource set corresponding to the first reference signal, and a first feedback channel for the first reference signal is sent to the transmitting end on the feedback channel resource. In this manner, the same reference signal can be used to achieve different measurement purposes, thereby saving reference signal resources and avoiding resource conflicts for feedback channels of the reference signal.

The reference signal measurement reporting method provided in the embodiments of the present application is described in detail below with different specific embodiments.

Embodiment 1

First, an example is used where a transmitting UE sends a single reference signal, the transmitting UE is UE1, the reference signal is an S-SSB, and the feedback channel for the S-SSB is a PSFCH. The S-SSB may be used for measurement by multiple UEs and for multiple purposes, and the S-SSB corresponds to a feedback channel resource set containing R1 PSFCH resources. Each receiving UE determines, based on its corresponding first parameter, a PSFCH resource to use from the feedback channel resource set corresponding to the S-SSB.

In an example, a receiving UE, for example, UE2, receives the S-SSB and wants to establish a unicast connection with UE1. If UE2 wants to complete initial beam pairing with UE1, UE2 may determine a feedback channel resource from the feedback channel resource set based on the first parameter and send a PSFCH to notify UE1 of the beam status of the S-SSB. In an example, the number of the PSFCH resource used by UE2 is $(ID_0)mod(R1)$, where $ID_0$ is the first parameter determined by UE2. In an example, $ID_0$ may be equal to a predefined default value or a configured value, such as 0; or $ID_0$ may be equal to $(P_{ID} + M_{ID})$, where $P_{ID}$ is one or more physical identifiers indicated in the S-SSB. For example, the S-SSB may carry the identifier corresponding to UE1 and sometimes may also carry a target receiving identifier to limit the recipient of the S-SSB. $M_{ID}$ may be equal to a predefined default value or a configured value, such as 0. It can be seen that UE2 has not yet established a connection with UE1 and cannot acquire configuration information from UE1. The PSFCH resource UE2 uses is not exclusive to UE2. For example, if another receiving UE, UE3, also has not established a connection with UE1 and sends a PSFCH on the PSFCH resource set corresponding to the S-SSB, the PSFCH resource used by UE3 is the same as that used by UE2. In this case, from the perspective of UE1, if UE1 receives feedback on the PSFCH resource numbered $(ID_0)mod(R1)$, UE1 may only determine that UE feedback exists for the S-SSB beam direction but cannot determine which UE or how many UEs the feedback comes from. In this case, the first parameter may be understood as a default parameter, and the corresponding feedback resource may be understood as a default resource.

It should be noted that the preceding $(ID_0)mod(R1)$ represents a modulo operation on R1 by $ID_0$. If $ID_0$ is always less than R1 and the result is still $ID_0$ after modulo, the modulo operation may not be performed, that is, the preceding $(ID_0)mod(R1)$ may be replaced by $ID_0$. The same is true in subsequent example descriptions and will not be repeated.

In an example, a receiving UE, for example, UE4, has established a unicast connection with UE1. UE1 configures a group of RSs for UE4 for beam maintenance, including the S-SSB. If UE4 wants to provide feedback for the S-SSB, UE4 determines a resource from the feedback channel resource set based on the first parameter and sends a PSFCH to notify UE1 of the beam status of the S-SSB. In an example, the number of the PSFCH resource used by UE4 is $(ID_4)mod(R1)$, where $ID_4$ is the first parameter determined by UE4. In an example, $ID_4$ comes from a value configured by UE1. For example, when UE1 configures an RS for beam maintenance, UE1 simultaneously configures the first parameter used by UE4 for the S-SSB; or $ID_4$ may be equal to $(P_{ID} + M_{ID4})$, where $P_{ID}$ is one or more physical identifiers indicated in the S-SSB, and $M_{ID4}$ comes from a value configured by UE1. For example, when UE1 configures an RS for beam maintenance, UE1 simultaneously configures $M_{ID}$ used by UE4 for the S-SSB. It can be seen that, in most cases, $ID_4$ and $M_{ID4}$ are equivalent and may be obtained from each other through operation. The two may be collectively referred to as the first parameter used to determine the PSFCH resource. UE1 directly configuring $ID_4$ and configuring $M_{ID4}$ to acquire the first parameter may be collectively referred to as configuring a corresponding first parameter for UE4. UE4 establishes a connection with UE1 and acquires configuration information from UE1. The PSFCH resource used based on the first parameter is exclusive to UE4.

It can be seen that since the configuration information related to the first parameter is tied to the measurement RS configured for a specific purpose, embodiment 1 may be understood as that UE1 distinguishes the PSFCH resources corresponding to measurements by different UEs for different purposes through the configuration of the first parameter or various identifier information.

In an example, a receiving UE, for example, UE5, has established a unicast connection with UE1. UE1 configures a group of RSs for UE5 for beam failure detection, including the S-SSB. If UE5 wants to provide feedback for the S-SSB, UE5 determines a resource from the feedback channel resource set based on the first parameter and sends a PSFCH to notify UE1 of the beam status of the S-SSB. Similarly, the number of the PSFCH resource used by UE5 is $(ID_5)mod(R1)$, where $ID_5$ is the first parameter determined by UE5 based on the configuration information of UE1. Similar to the above, $ID_5$ may come directly from the configuration of UE1 or may be equal to $(P_{ID} + M_{ID5})$, where $P_{ID}$ is one or more physical identifiers indicated in the S-SSB, and $M_{ID5}$ comes from a value configured by UE1. Similarly, in an example, for a receiving UE, such as UE6, a group of RSs may be configured for determining a candidate beam. The S-SSB may be included in the group of RSs. Similarly, UE6 may determine its corresponding first parameter based on the configuration ($ID_6$ or $M_{ID6}$) of UE1 and ultimately determine the number of the PSFCH resource used, which is similar to the process described above and will not be repeated here.

Additionally, in an example, for the same UE, a single RS may be configured for multiple purposes. For example, UE1 may also configure another group of RSs for UE4 for BFD, also including the S-SSB, and configure related information to determine a first parameter corresponding to the UE4, such as configuring $ID_{4x}$ or $M_{ID4x}$ to determine a corresponding PSFCH resource. Generally, to allow UE1 to distinguish the purpose for which UE4 sends feedback, for the S-SSB, the first parameter determined for BM and the first parameter determined for BFD are different, so the feedback resources corresponding to feedback for the two different purposes are also different. Additionally, for different UEs, to distinguish different UEs, UE1 should configure different parameters for them, such as configuring different IDs or $M_{ID}$ to determine different first parameters, thereby determining different PSFCH resources. Moreover, when UE1 configures parameters to determine the first parameter for a receiving UE, UE1 should avoid conflicts with the default first parameter, that is, avoid using the default feedback resource. That is, in embodiment 1, through the first parameter, different receiving UEs and different measurement purposes can be distinguished.

Embodiment 1.1

For an S-SSB, it corresponds to a feedback channel resource set containing R1 PSFCH channel resources. In an example, UE1 may further divide the feedback channel resource set into different subsets, and one subset may correspond to one or more purposes. Further, UE1 may allow a receiving UE to determine the receiving UE's corresponding first parameter and PSFCH resource in a PSFCH subset through configuration information.

For example, among R1 PSFCH resources, resource number 0 is used for IBP, numbers 1 to n are used for BM, numbers n+1 to m are used for BFD, and numbers m to R1-1 are used for CBD. It should be noted that this is only an example of division, and specific divisions may also be discretely selecting certain numbers for specific purposes. No restrictions are imposed on the specific subset division method. Additionally, different purposes may correspond to the same subset. For example, the subsets for BFD and CBD may be the same subset. UE1 may notify the receiving UEs with which it establishes a connection of the division of these subsets and the correspondence between subsets and measurement purposes through configuration information.

An example where receiving UEs UE2 and UE3 perform CBD is used to illustrate the determination method of the first parameter and feedback channel resources. UE1 divides the feedback channel resource set corresponding to an S-SSB into several subsets. When configuring reference signals for CBD for UE2 and UE3, UE1 also notifies UE2 and UE3 of the feedback channel resource subset corresponding to the reference signal. Assuming an S-SSB is configured in both the reference signals for CBD for UE2 and the reference signals for CBD for UE3, a subset is allocated for CBD in the PSFCH resource set corresponding to the S-SSB, and the subset contains R2 PSFCH resources. In an example, UE1 configures the first parameter for UE2 to determine the PSFCH resource in the subset, for example, configuring $ID_2^{CBD}$. Then the number of the corresponding PSFCH resource in the subset is

$\left(\mathrm{ID}_2^{\mathrm{CBD}}\right)\mathrm{mod}(\mathrm{R2})$. The number of the PSFCH in the PSFCH resource set may be acquired from the number of the PSFCH in the subset, which will not be repeated hereafter. Similarly, for UE3, UE1 configures the first parameter for UE3 to determine the PSFCH resource in the subset, for example, configuring $\mathrm{ID}_3^{\mathrm{CBD}}$. Then the number of the corresponding PSFCH resource in the subset is $\left(\mathrm{ID}_3^{\mathrm{CBD}}\right)\mathrm{mod}(\mathrm{R2})$.

A receiving UE may also perform measurements for multiple purposes, corresponding to multiple subsets. UE1 may configure the first parameter corresponding to each subset for the receiving UE. For example, the reference signal for BFD for UE2 also includes the S-SSB, and UE1 allocates a PSFCH resource subset for BFD. Assuming the subset contains R3 PSFCH resources. UE1 needs to notify UE2 of the division of the subset. In an example, UE1 configures the first parameter for UE2 to determine the PSFCH resource in the subset corresponding to BFD, for example, configuring $\mathrm{ID}_2^{\mathrm{BFD}}$. Then the number of the corresponding PSFCH resource in the subset is $\left(\mathrm{ID}_2^{\mathrm{BFD}}\right)\mathrm{mod}(\mathrm{R3})$.

Embodiment 1.2

For an S-SSB, it corresponds to a feedback channel resource set containing R1 PSFCH channel resources. In an example, the network side, base station, or other higher-layer entities (collectively referred to as the network side hereafter in the present application) may further divide the feedback channel resource set into different subsets, and one subset may correspond to one or more purposes. For example, among R1 PSFCH resources, resource number 0 is used for IBP, numbers 1 to n are used for BM, numbers n+1 to m are used for BFD, and numbers m to R1-1 are used for CBD. It should be noted that this is only an example of division, and specific divisions may also be discretely selecting certain numbers for specific purposes. No restrictions are imposed on the specific subset division method. Additionally, different purposes may correspond to the same subset. For example, the subsets for BFD and CBD may be the same subset. The network may notify UEs of the division of these subsets and the correspondence between subsets and measurement purposes through configuration information.

Further, UE1 may allow a receiving UE to determine the receiving UE's corresponding first parameter and PSFCH resource in a PSFCH subset through configuration information, which is similar to embodiment 1.1 and will not be repeated here. That is, the main difference between this embodiment and embodiment 1.1 is that the division of PSFCH resource subsets is configured by the network, while the process of the receiving UE determining the corresponding first parameter and PSFCH resource in the subset is consistent.

Embodiment 1.3

For an S-SSB, it may correspond to multiple feedback channel resource sets. As in embodiment 1, the network side may configure multiple candidate PSFCH resource sets, and different candidate PSFCH resource sets correspond to different purposes. As shown in embodiment 1, through the mapping relationship between the S-SSB and PSFCH resources, an S-SSB may acquire its corresponding multiple PSFCH resource sets. For example, set 1 is a PSFCH resource set mapped from the candidate resource set for IBP, containing R1 PSFCH resources. Similarly, set 2 containing R2 PSFCHs is used for BM, and set 3 containing R3 PSFCH resources is used for BFD, and so on.

Further, UE1 may allow a receiving UE to determine the receiving UE's corresponding first parameter and PSFCH resource in a PSFCH resource set through configuration information, which is similar to embodiment 1.1 and will not be repeated here. That is, embodiments 1.1, 1.2, and 1.3 are essentially similar solutions, where an S-SSB corresponds to multiple sets or subsets, and the process of determining the corresponding first parameter and PSFCH resource in a set or subset is consistent.

Embodiment 2

This embodiment is illustrated by using an example where a group of RSs consists of multiple RSs. For example, a UE may send multiple RSs in a basic time-domain unit, such as sending multiple channel state information-reference signals (CSI-RSs) in a slot. Multiple RSs may correspond to multiple beam directions. It is assumed that a group of RSs sent by a UE in a slot may include at most N1 RSs. Based on the method of embodiment 1, this group of RSs may be treated as a whole. That is, when PSFCH resources are mapped, the group of RSs is similar to an S-SSB in embodiment 1. In an example, a group of RSs maps to a PSFCH resource set containing R1 PSFCH resources. It can be seen that embodiment 1 may be regarded as a special case of embodiment 2, where a group of RSs contains only one RS.

In an example, similar to an S-SSB, a group of RSs is associated with indication information. For example, the indication information may be carried in sidelink control information (SCI), a MAC control element (MAC CE), or a broadcast information physical sidelink broadcast channel (PSBCH). Hereafter, SCI is used as an example for illustration.

In an example, the transmitting UE, for example, UE1, sends a group of RSs containing N2 RSs, where N2 is less than or equal to N1. A group of RSs may be used for measurement by multiple UEs and for multiple purposes and corresponds to a feedback channel resource set containing R1 PSFCH resources. Similar to embodiment 1, each receiving UE determines, based on its corresponding first parameter, the PSFCH resource to use from the feedback channel resource set corresponding to the group of RSs. The first parameter may come from at least one of the following: indication or configuration by UE1, configuration by a network or base station, or a predefined default value.

In an example, a receiving UE, for example, UE2, receives the S-SSB and wants to establish a unicast connection with UE1. If UE2 wants to complete initial beam pairing with UE1, UE2 may determine a resource from the feedback channel resource set based on the first parameter and send a PSFCH to notify UE1 of the beam status of one or more RSs in the group of RSs. In an example, if UE2 wants to provide feedback for the RS numbered n in the group of RSs, the number of the PSFCH resource used is $(ID_{0-n})mod(R1)$, where $(ID_{0-n})$ is the first parameter determined by UE2. In an example, $(ID_{0-n})$ may be equal to a predefined default value or a configured value, or calculated based on a default value. For example, the value is predefined as the number n of the RS in the group of RSs. Alternatively, $(ID_{0-n})$ is equal to $(P_{ID} + M_{ID})$, where $P_{ID}$ is one or more physical identifiers indicated in the indication information corresponding to the group of RSs. For example, SCI may carry an identifier corresponding to UE1 and sometimes a target receiving identifier to limit the recipient of the group of RSs. $M_{ID}$ may be equal to a predefined default value or a configured value, such as the number n of the RS in the group of RSs. Alternatively, $ID_{0-n}$ may be equal to $(P_{ID} + M_{ID} + n)$, where $P_{ID}$ is one or more physical identifiers indicated in the indication information corresponding to the group of RSs, $M_{ID}$ may be equal to a predefined default value or a configured value, such as 0, and n is the number n of the RS in the group of RSs. It can be seen that these methods are actually equivalent and may be converted to each other, and these methods will not be listed hereafter. UE2 has not yet established a connection with UE1 and cannot acquire configuration information from UE1. Thus, similar to embodiment 1, from the perspective of UE1, if UE1 receives feedback on the PSFCH resource corresponding to an RS, UE1 may only determine that UE feedback exists for the RS beam direction but cannot determine which UE or how many UEs the feedback comes from. In this case, the first parameter may be understood as a default parameter for each RS, and the corresponding feedback resource may be understood as the default resource for the RS.

In an example, a receiving UE, for example, UE4, has established a unicast connection with UE1. UE1 configures RSs for UE4 for beam maintenance, including one or more RSs in the group of RSs sent by UE1. If UE4 wants to provide feedback for an RS numbered n in the group of RSs, UE4 determines a resource from the feedback channel resource set based on the first parameter and sends a PSFCH. In an example, the number of the PSFCH resource used by UE4 is $(ID_{4-n})mod(R1)$, where $ID_{4-n}$ is the first parameter determined by UE4. In an example, $ID_{4-n}$ comes from a value configured by UE1. For example, when UE1 configures an RS for beam maintenance, UE1 simultaneously configures a first parameter used by UE4 for the RS. Alternatively, $ID_{4-n}$ may be equal to $(P_{ID} + M_{ID4-n})$, where $P_{ID}$ is one or more physical identifiers indicated in the control information of the RS, and $M_{ID4-n}$ comes from a value configured by UE1. Alternatively, $ID_{4-n}$ may be equal to $(P_{ID} + N1 * M_{ID4} + n)$, where $M_{ID4}$ comes from a value configured by UE1. It can be seen that the preceding examples are equivalent. In summary, for an RS in a group of RSs, UE1 may configure a first parameter corresponding to the RS for UE4 through configuration information and determine a corresponding PSFCH resource. Similar to embodiment 1, for different UEs and different purposes, different first parameters may be configured to determine their corresponding PSFCH feedback resources. That is, in embodiment 2, through the first parameter, different receiving UEs, different measurement purposes, and different RSs in a group of RSs can be distinguished.

Embodiment 2.1

Similar to embodiment 1.1, for a group of RSs, the group of RSs corresponds to a feedback channel resource set containing R1 PSFCH channel resources. In an example, UE1 may further divide the feedback channel resource set into different subsets, and one subset may correspond to one or more measurement purposes. Further, UE1 may allow a receiving UE to determine the first parameter and PSFCH resource corresponding to one RS in a PSFCH subset through configuration information. UE1 may notify the receiving UEs with which it establishes a connection of the division of these subsets and the correspondence between subsets and measurement purposes through configuration information. Similarly, similar to embodiment 1.2, the division of subsets and the correspondence with measurement purposes may also be configured by the network. Alternatively, similar to embodiment 1.3, a group of RSs corresponds to multiple feedback channel resource sets, and one set may correspond to one or more measurement purposes. That is, similarly, a group of RSs corresponds to multiple sets or subsets, and for each set or subset, the transmitting UE may further determine the corresponding PSFCH resource through the configured first parameter. An example where Set-1 (set 1 or subset 1) corresponds to IBP, Set-2 (set 2 or subset 2) corresponds to BFD, and Set-3 (set 3 or subset 3) corresponds to CBD is used for illustration. It is assumed that Set-1, Set-2, and Set-3 each contain R1, R2, and R3 PSFCH resources, respectively.

An example where receiving UEs UE2 and UE3 perform CBD is used to illustrate the determination method of the first parameter and feedback channel resources. UE1 sends a group of RSs, and when this group of RSs is used for CBD, the PSFCH resources are Set-3 containing R3 resources. An RS with number or sequence n in this group of RSs is configured in the reference signals for CBD for UE2 and also in the reference signals for CBD for UE3. In an example, UE1 configures the first parameter for UE2 to determine the PSFCH resource in Set-3, for example, configuring $ID_{2-n}^{CBD}$ . Then the number of the corresponding PSFCH resource in the subset is $\left(ID_{2-n}^{CBD}\right)mod(R3)$ . Similarly, for UE3, UE1 configures the first parameter for UE3 to determine the PSFCH resource in the subset, for example, configuring $ID_{3-n}^{CBD}$ . Then the number of the corresponding PSFCH resource in the subset is $\left(ID_{3-n}^{CBD}\right)mod(R3)$ . Similar to embodiment 2, $ID_{2-n}^{CBD}$ is used as an example. $ID_{2-n}^{CBD}$ may be directly configured by UE1 or equivalently obtained by operations of other configured parameters. For example, $M_{ID2-n}$ is configured, and $ID_{2-n}^{CBD} = (P_{ID} + M_{ID2-n})$ ; or $M_{ID2}$ is configured, and $ID_{2-n}^{CBD} = (P_{ID} + N1 * M_{ID2} + n)$ ; or the first parameter is obtained through other operations. The preceding are collectively referred to as the first parameter configured by UE1 to determine the corresponding PSFCH resource.

Embodiment 3

This embodiment describes the sending conditions and content of PSFCHs in various scenarios. The preceding embodiments describe how a receiving UE determines its corresponding PSFCH resource when the receiving UE needs to send PSFCH feedback, such as measurement results. This embodiment describes some conditions that a receiving UE needs to satisfy to send a PSFCH. Still assuming UE1 is the UE sending RSs, the sending conditions may vary depending on the measurement purpose of the receiving UE.

For example, if receiving UE2 performs IBP and if the reference signal receiving power (RSRP) of an RS is greater than or equal to a first threshold, UE2 may send a corresponding PSFCH to notify the UE sending the RS that the beam corresponding to the RS is the beam desired or selected by UE2. Alternatively, relatively speaking, if the received power of the RS is among the top N RSs received by UE2, UE2 may send the corresponding PSFCH to notify that the beam of the RS is a selected beam. A special case is that N is 1, that is, only the best beam is fed back. As known from the preceding embodiments, the PSFCH resource for IBP may be used by multiple UEs, so multiple UEs may be allowed to send the same content on one PSFCH resource to avoid interference. For example, if multiple UEs send sequences on the PSFCH resource, the sequences used are the same.

For example, if receiving UE2 performs BFD and if the RSRP of an RS is less than or equal to a second threshold or cannot be detected, UE2 may send the corresponding PSFCH to notify the UE sending the RS that the beam corresponding to the RS degrades or fails. Additionally, optionally, if the received power is greater than or equal to a third threshold, UE2 may also send a PSFCH to notify that the beam is still available, where the third threshold may be the same as the second threshold or greater than or equal to the second threshold.

For example, if receiving UE2 performs CBD and if the RSRP of an RS is greater than or equal to a fourth threshold, UE2 may send the corresponding PSFCH to notify the UE sending the RS that the beam corresponding to the RS is a new candidate beam. Additionally, optionally, if the received power is less than or equal to a fifth threshold, UE2 may also send a PSFCH to notify that the beam is not a newly selected beam, where the fifth threshold may be the same as the fourth threshold or less than or equal to the fourth threshold. Additionally, for UE2 detecting RSs corresponding to CBD, in an example, UE2 detects the RSs corresponding to CBD only after detecting a beam failure. In an example, a beam failure may indicate that UE2 determines that all RSs for BFD have failed, or the number or proportion of failed RSs or beams reaches a certain level. In another example, UE2 may also periodically detect RSs for CBD and send PSFCHs according to the preceding process. In this case, the feedback does not necessarily notify a new candidate beam. For example, the feedback may only notify whether the beam of the RS exceeds the threshold. Additionally, for UE1 sending RSs corresponding to CBD, UE1 may send RSs corresponding to CBD periodically or only start sending RSs corresponding to CBD after detecting a beam failure. UE1 detecting a beam failure may mean that UE1 receives a beam failure indication from UE2 or UE1 determines beam failure based on other feedback information from UE2 or based on the inability to receive feedback information from UE2.

For example, if receiving UE2 performs BM and if the RSRP of an RS is greater than or equal to a sixth threshold, UE2 may send the corresponding PSFCH to notify the UE sending the RS that the beam corresponding to the RS is greater than or equal to the threshold. Alternatively, relatively speaking, if the received power of the RS is among the top N RSs received by UE2, UE2 may send the corresponding PSFCH to notify that the beam of the RS is one of the best N beams. A special case is that N is 1, that is, only the best beam is fed back. Additionally, optionally, if the received power is less than or equal to a seventh threshold, or the RS cannot be detected, UE2 may also send feedback information to notify that the beam corresponding to the RS is less than or equal to the threshold, where the seventh threshold may be the same as the sixth threshold or less than or equal to the sixth threshold.

In addition to measuring and reporting reference signals for beam purposes as described in the preceding examples, a UE may also perform measurements and feedback for other purposes. The method for acquiring the corresponding first parameter and feedback channel resource may use the preceding methods, and the present application does not limit the purpose of measuring reference signals. For example, other measurement purposes may include but are not limited to measuring RSs to acquire channel state information (CSI), measuring RSs to acquire positioning information, measuring RSs to acquire propagation delay information, measuring RSs to acquire received power at the receiving UE, measuring RSs to acquire timing deviation, measuring RSs to acquire frequency deviation, or measuring RSs to acquire phase deviation.

The preceding examples are described with the PSFCH carrying binary information such as yes/no and good/bad. In some examples, the PSFCH may also carry received power information or received power level information. Similarly, the present application does not limit the content carried by the PSFCH. When the PSFCH carries other information, the method of the present application may still be used to determine the first parameter and the resource used by the PSFCH.

Additionally, a UE may need to send multiple PSFCHs simultaneously. If these PSFCHs exceed the number of transmissions supported by the UE or the total transmission power of the UE, the UE needs to prioritize sending PSFCHs with higher priority under the constraints of power and transmission quantity.

For the PSFCHs corresponding to the preceding beam measurements, the priority of the PSFCHs may be equal to the priority of corresponding indication information of the PSFCHs, such as the priority corresponding to or indicated by the PSBCH or SCI.

Alternatively, the network side may predefine or configure a priority for the PSFCHs corresponding to beam measurements or predefine or configure different priorities for PSFCHs corresponding to measurements for different purposes. For example, the network side configures one priority for feedback corresponding to CBD and another priority for feedback corresponding to BM measurements.

In an example, the priority of PSFCHs corresponding to beam measurements may always be lower than the priority of PSFCHs carrying hybrid automatic repeat request acknowledgment information (HARQ-ACK). That is, if PSFCHs carrying HARQ-ACK information exist, the PSFCHs should be sent first. Alternatively, the priority values of the two may be directly compared. For example, the one with the larger priority value has the lower priority.

FIG. 3 is a diagram illustrating the structure of a reference signal measurement reporting apparatus according to an embodiment of the present application. As shown in FIG. 3, the reference signal measurement reporting apparatus provided by this embodiment includes a configuration module 31 and transmission module 32.

The configuration module 31 is configured to configure a first reference signal group. The first reference signal group includes at least one first reference signal. The first reference signal group has a corresponding measurement purpose. The configuration module 31 is configured to configure a first parameter corresponding to each first reference signal. The first parameter is used to determine a feedback channel resource corresponding to the each first reference signal. The transmission module 32 is configured to send the at least one first reference signal in the first reference signal group and receive a first feedback channel on a feedback channel resource corresponding to the at least one first reference signal.

The reference signal measurement reporting apparatus provided by this embodiment is disposed at the transmitting end and is used to perform the reference signal measurement reporting method of the embodiment shown in FIG. 1. The implementation principles and technical effects thereof are similar and will not be repeated here.

FIG. 4 is a diagram illustrating the structure of another reference signal measurement reporting apparatus according to an embodiment of the present application. As shown in FIG. 4, the reference signal measurement reporting apparatus provided by this embodiment includes a detection module 41 and a transmission module 42.

The detection module 41 is configured to detect a first reference signal sent by a transmitting end, determine a first parameter corresponding to the first reference signal, and determine a measurement purpose of the first reference signal. The transmission module 42 is configured to determine, based on the first parameter, a feedback channel resource corresponding to the first reference signal from a feedback channel resource set corresponding to the first reference signal, and send a first feedback channel for the first reference signal to the transmitting end on the feedback channel resource.

The reference signal measurement reporting apparatus provided by this embodiment is disposed at the receiving end and is used to perform the reference signal measurement reporting method of the embodiment shown in FIG. 2. The implementation principles and technical effects thereof are similar and will not be repeated here.

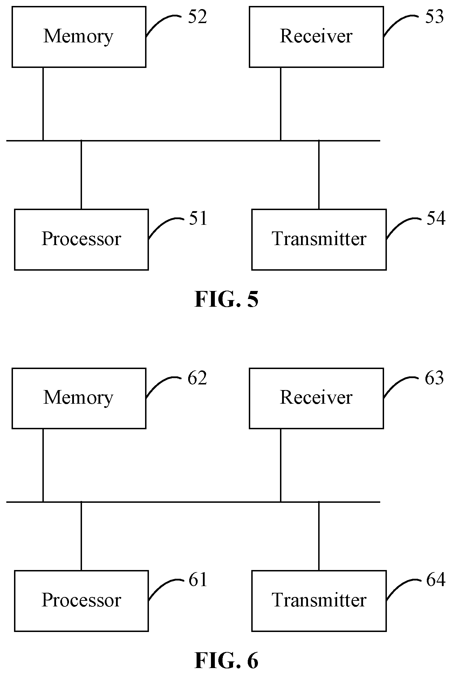

FIG. 5 is a diagram illustrating the structure of a terminal device according to an embodiment of the present application. As shown in FIG. 5, the terminal device includes a processor 51, a memory 52, a receiver 53, and a transmitter 54. One or more processors 51 may be provided in the terminal device, with one processor 51 shown in FIG. 5 as an example. The processor 51, the memory 52, the receiver 53, and the transmitter 54 in the terminal device may be connected via a bus or other means. In FIG. 5, the connection via the bus is used as an example.

As a computer-readable storage medium, the memory 52 may be configured to store a software program, a computer executable program, and a module, for example, program instructions/modules (configuration module 31 and transmission module 32) corresponding to the reference signal measurement reporting method in the embodiment of FIG. 1. The processor 51 executes the software program, instruction, and module stored in the memory 52 to perform various functions and data processing of the terminal device, thereby implementing the preceding reference signal measurement reporting method.

The memory 52 may mainly include a program storage region and a data storage region. The program storage region may store an operating system and an application program required by at least one function. The data storage region may store data created depending on the use of a terminal device. Moreover, the memory 52 may include a high-speed random-access memory and may also include a non-volatile memory such as at least one magnetic disk memory, a flash memory, or another non-volatile solid-state memory.

The receiver 53 is any device/module with data receiving capability or a combination of multiple devices/-modules with data receiving capability. The transmitter 54 is any device/module with data transmitting capability or a combination of multiple devices/modules with data transmitting capability.

FIG. 6 is a diagram illustrating the structure of another terminal device according to an embodiment of the present application. As shown in FIG. 6, the terminal device includes a processor 61, a memory 62, a receiver 63, and a transmitter 64. One or more processors 61 may be provided in the terminal device, with one processor 61 shown in FIG. 6 as an example. The processor 61, the memory 62, the receiver 63, and the transmitter 64 in the terminal device may be connected via a bus or other means. In FIG. 6, the connection via the bus is used as an example.

As a computer-readable storage medium, the memory 62 may be configured to store a software program, a computer executable program, and a module, for example, program instructions/modules (detection module 41 and transmission module 42) corresponding to the reference signal measurement reporting method in the embodiment of FIG. 2. The processor 61 executes the software program, instruction, and module stored in the memory 62 to perform various functions and data processing of the terminal device, thereby implementing the preceding reference signal measurement reporting method.

The memory 62 may mainly include a program storage region and a data storage region. The program storage region may store an operating system and an application program required by at least one function. The data storage region may store data created depending on the use of a terminal device. Moreover, the memory 62 may include a high-speed random-access memory and may also include a non-volatile memory such as at least one magnetic disk memory, a flash memory, or another non-volatile solid-state memory.

The receiver 63 is any device/module with data receiving capability or a combination of multiple devices/-modules with data receiving capability. The transmitter 64 is any device/module with data transmitting capability or a combination of multiple devices/modules with data transmitting capability.

Embodiments of the present application also provide a storage medium containing computer-executable instructions, which, when executed by a computer processor, perform a reference signal measurement reporting method. The method includes the following: A first reference signal group is configured. The first reference signal group includes at least one first reference signal. The first reference signal group has a corresponding measurement purpose. A first parameter corresponding to each first reference signal is configured. The first parameter is used to determine a feedback channel resource corresponding to the each first reference signal. The at least one first reference signal in the first reference signal group is sent, and a first feedback channel is received on a feedback channel resource corresponding to the at least one first reference signal.

Embodiments of the present application also provide a storage medium containing computer-executable instructions, which, when executed by a computer processor, perform a reference signal measurement reporting method. The method includes the following: A first reference signal sent by a transmitting end is detected, a first parameter corresponding to the first reference signal is determined, and a measurement purpose of the first reference signal is determined. Based on the first parameter, a feedback channel resource corresponding to the first reference signal is determined from a feedback channel resource set corresponding to the first reference signal, and a first feedback channel for the first reference signal is sent to the transmitting end on the feedback channel resource.

Although the embodiments disclosed by the present application are as described above, the content thereof is only embodiments for facilitating the understanding of the solutions of the present application and is not intended to limit the present application. Any person skilled in the art to which the present application pertains can make any modifications and changes in the forms and details of the implementation without departing from the solutions disclosed by the present application, but the scope of protection defined by the present application is still subject to the scope defined by the appended claims.

**Claims**

1. A reference signal measurement reporting method, the method being applied to a transmitting end and comprising:

configuring a first reference signal group, wherein the first reference signal group comprises at least one first reference signal, the first reference signal group has a corresponding measurement purpose, and configuring a first parameter corresponding to each first reference signal of the at least one first reference signal, wherein the first parameter is used to determine a feedback channel resource corresponding to the each first reference signal; and

sending the at least one first reference signal in the first reference signal group, and receiving a first feedback channel on a feedback channel resource corresponding to the at least one first reference signal.

2. The method according to claim 1, wherein the first reference signal group corresponds to one or more feedback channel resource sets, or each first reference signal in the first reference signal group corresponds to one or more feedback channel resource sets.

3. The method according to claim 2, wherein the first parameter is used to determine the feedback channel resource corresponding to the each first reference signal comprises at least one of:

determining, by using the first parameter, a resource position of the feedback channel resource corresponding to the each first reference signal from the one or more feedback channel resource sets corresponding to the each first reference signal; or

determining, by using the first parameter, a resource position of the feedback channel resource corresponding to the each first reference signal from the one or more feedback channel resource sets corresponding to the first reference signal group.

4. The method according to claim 3, wherein the first parameter comprises one of: a feedback resource identifier, an index of a feedback resource in a feedback channel resource set of the one or more feedback channel resource sets, or a group member identifier.

5. The method according to any one of claims 1 to 4, wherein the first parameter is configured by the transmitting end, or the first parameter is configured by a network side, or the first parameter is a predefined value.

6. The method according to claim 5, wherein the first parameter is used to determine at least one of the following for the corresponding feedback channel resource:

a receiving end that acquires a first parameter configuration from the transmitting end sends a feedback channel on a feedback channel resource corresponding to a first reference signal determined by a first parameter configured by the transmitting end; or

a receiving end that does not acquire a first parameter configuration from the transmitting end sends a feedback channel on a feedback channel resource corresponding to a first reference signal determined by a predefined first parameter or a first parameter configured by a network side.

7. The method according to any one of claims 1 to 4, wherein the measurement purpose corresponding to the first reference signal group comprises at least one of:

initial beam pairing, beam maintenance, beam failure detection, or candidate beam determination.

8. The method according to any one of claims 1 to 4, wherein the first reference signal group further comprises at least one of:

a feedback channel resource set corresponding to the first reference signal group or a feedback channel resource subset corresponding to the first reference signal group;

a device identifier corresponding to the at least one first reference signal in the first reference signal group; or

a time-frequency position and a period of the at least one first reference signal in the first reference signal group.

9. A reference signal measurement reporting method, the method being applied to a receiving end and comprising:

detecting a first reference signal sent by a transmitting end, determining a first parameter corresponding to the first reference signal, and determining a measurement purpose of the first reference signal; and

determining, based on the first parameter, a feedback channel resource corresponding to the first reference signal from a feedback channel resource set corresponding to the first reference signal, and sending a first feedback channel for the first reference signal to the transmitting end on the feedback channel resource.

10. The method according to claim 9, wherein the first reference signal is comprised in a first reference signal group, and the first reference signal group comprises at least one first reference signal; and the first reference signal group corresponds to one or more feedback channel resource sets, or each first reference signal in the first reference signal group corresponds to one or more feedback channel resource sets.

11. The method according to claim 10, wherein determining, based on the first parameter, the feedback channel resource corresponding to the first reference signal from the feedback channel resource set corresponding to the first reference signal comprises at least one of:

   determining, based on the first parameter, a resource position of the feedback channel resource corresponding to the first reference signal from one or more feedback channel resource sets corresponding to the first reference signal; or

   determining, based on the first parameter, a resource position of the feedback channel resource corresponding to the first reference signal from the one or more feedback channel resource sets corresponding to the first reference signal group.

12. The method according to claim 11, wherein the first parameter comprises one of: a feedback resource identifier, an index of a feedback resource in the feedback channel resource set, or a group member identifier.

13. The method according to any one of claims 9 to 12, wherein determining the first parameter corresponding to the first reference signal comprises one of:

   receiving the first parameter configured by the transmitting end;
   receiving the first parameter configured by a network side; or
   determining the first parameter based on a predefined value.

14. The method according to claim 13, wherein determining, based on the first parameter, the feedback channel resource corresponding to the first reference signal from the feedback channel resource set corresponding to the first reference signal comprises:

   determining, by a receiving end that acquires a first parameter configuration from the transmitting end, a feedback channel resource corresponding to the first reference signal based on a feedback channel resource set corresponding to a first reference signal determined by a first parameter configured by the transmitting end; and
   determining, by a receiving end that does not acquire a first parameter configuration from the transmitting end, a feedback channel resource corresponding to the first reference signal based on a feedback channel resource set corresponding to a first reference signal determined by a predefined first parameter or a first parameter configured by a network side.

15. The method according to any one of claims 9 to 12, wherein the measurement purpose of the first reference signal comprises at least one of:
   initial beam pairing, beam maintenance, beam failure detection, or candidate beam determination.

16. The method according to any one of claims 9 to 12, wherein the first reference signal further comprises at least one of:

   a feedback channel resource set corresponding to the first reference signal or a feedback channel resource subset corresponding to the first reference signal;
   a device identifier corresponding to the first reference signal; or
   a time-frequency position and a period of the first reference signal.

17. A reference signal measurement reporting apparatus, comprising:

   a configuration module configured to configure a first reference signal group, wherein the first reference signal group comprises at least one first reference signal, the first reference signal group has a corresponding measurement purpose, and configure a first parameter corresponding to each first reference signal of the at least one first reference signal, wherein the first parameter is used to determine a feedback channel resource corresponding to the each first reference signal; and
   a transmission module configured to send the at least one first reference signal in the first reference signal group and receive a first feedback channel on a feedback channel resource corresponding to the at least one first reference signal.

18. A reference signal measurement reporting apparatus, comprising:

   a detection module configured to detect a first reference signal sent by a transmitting end, determine a first parameter corresponding to the first reference signal, and determine a measurement purpose of the first reference signal; and
   a transmission module configured to determine, based on the first parameter, a feedback channel resource corresponding to the first reference signal from a feedback channel resource set corresponding to the first reference signal, and send a first feedback channel for the first reference signal to the transmitting end on the feedback channel resource.

19. A terminal device, comprising:

    a memory configured to store a program; and
    a processor configured to execute the program, wherein when the program is executed, the reference signal measurement reporting method according to any one of claims 1 to 8 or the reference signal measurement reporting method according to any one of claims 9 to 16 is performed.

20. A non-transitory storage medium, comprising a stored program, wherein when the program is executed, the reference signal measurement reporting method according to any one of claims 1 to 8 or the reference signal measurement reporting method according to any one of claims 9 to 16 is performed.

Configure a first reference signal group, where the first reference signal group includes at least one first reference signal, the first reference signal group has a corresponding measurement purpose, and configure a first parameter corresponding to each first reference signal, where the first parameter is used to determine a feedback channel resource corresponding to the each first reference signal

S110

Send at least one first reference signal in the first reference signal group and receive a first feedback channel on a feedback channel resource corresponding to the at least one first reference signal

S120

**FIG. 1**

Detect a first reference signal sent by a transmitting end, determine a first parameter corresponding to the first reference signal, and determine a measurement purpose of the first reference signal

S210

Determine, based on the first parameter, a feedback channel resource corresponding to the first reference signal from a feedback channel resource set corresponding to the first reference signal, and send a first feedback channel for the first reference signal to the transmitting end on the feedback channel resource

S220

**FIG. 2**

| Configuration module | 31 | Transmission module | 32 |

**FIG. 3**

| Detection module | 41 | Transmission module | 42 |

**FIG. 4**

| Memory | 52 | Receiver | 53 |

| Processor | 51 | Transmitter | 54 |

**FIG. 5**

| Memory | 62 | Receiver | 63 |

| Processor | 61 | Transmitter | 64 |

**FIG. 6**

# EP 4 629 691 A1

## INTERNATIONAL SEARCH REPORT

International application No.

**PCT/CN2024/097054**

### A. CLASSIFICATION OF SUBJECT MATTER

H04W24/10(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; VEN; ENTXTC; CNKI; 3GPP: 参考信号, 目的, 用途, 反馈, 测量, RS, reference signal, purpose, use, feedback, measure+

### C. DOCUMENTS CONSIDERED TO BE RELEVANT

| Category* | Citation of document, with indication, where appropriate, of the relevant passages | Relevant to claim No. |
|---|---|---|
| PX | CN 117939524 A (ZTE CORP.) 26 April 2024 (2024-04-26) description, paragraphs [0030]-[0130] | 1-20 |
| X | CN 114830697 A (GUANGDONG OPPO MOBILE TELECOMMUNICATIONS CORP., LTD.) 29 July 2022 (2022-07-29) description, paragraphs [0040]-[0264] | 1-20 |
| A | CN 112838918 A (ZTE CORP.) 25 May 2021 (2021-05-25) entire document | 1-20 |
| A | WO 2018126803 A1 (ZTE CORP.) 12 July 2018 (2018-07-12) entire document | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2024** | **10 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2024/097054** |

| Patent document cited in search report | | | Publication date (day/month/year) | Patent family member(s) | Publication date (day/month/year) |
| --- | --- | --- | --- | --- | --- |
| CN | 117939524 | A | 26 April 2024 | None | |
| CN | 114830697 | A | 29 July 2022 | None | |
| CN | 112838918 | A | 25 May 2021 | None | |
| WO | 2018126803 | A1 | 12 July 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311020970